# EUROPÄISCHE PATENTSCHRIFT

(11) **EP 2 494 244 B1**
(45) Veröffentlichungstag und Bekanntmachung des Hinweises auf die Patenterteilung: **11.09.2013**
(21) Anmeldenummer: 10750060.5
(22) Anmeldetag: 26.08.2010
(51) Int. Cl.: F16K 31/40

(54) **MAGNETVENTIL**
SOLENOID VALVE
ÉLECTROVANNE

(30) Priorität: 26.10.2009 DE 102009051573; 26.10.2009 DE 102009051574; 26.10.2009 DE 102009051572
(43) Veröffentlichungstag der Anmeldung: 05.09.2012
(73) Patentinhaber: Hydac Fluidtechnik GmbH, 66280 Sulzbach/Saar (DE)
(72) Erfinder: HILZENDEGEN, Philipp, 66123 Saarbrücken (DE); HELL, Franz-Rudolf, 66822 Lebach (DE); Bereschka, Andreas, F-57460 Bousbach (FR)
(74) Vertreter: Bartels, Martin Erich Arthur
(86) Internationale Anmeldenummer: PCT/EP2010/005241
(87) Internationale Veröffentlichungsnummer: WO 2011/050879

(56) Entgegenhaltungen:
- DE-A1-102006 055 796
- DE-A1-102008 020 855
- US-A- 5 271 599
- US-B1- 7 036 788

## Beschreibung

Die Erfindung betrifft ein Magnetventil für die Ansteuerung eines Fluids mit einem ersten Gehäuseteil, mit einer nach innen weisenden Axialführung für einen Anker, der unter der Wirkung einer das erste Gehäuseteil nach außen hin zumindest teilweise umgebenden Magnetspule in der Axialführung verschiebbar ist, mit einer Rückstellfeder und einem, ein Ventilschließglied beaufschlagenden Schließelement, und mit einem zweiten Gehäuseteil, das koaxial zu dem ersten Gehäuseteil angeordnet ist.

Die DE-U-85 22 724 beschreibt ein Magnetventil mit einem ersten zylindrischen, aus einem ferromagnetischen Material gebildeten Gehäuseteil und einem zweiten hülsenförmigen, gleichfalls aus einem ferromagnetischen Material bestehenden Gehäuseteil zur Aufnahme eines Magnetankers, der einen Ventilsitzkörper des Ventils ansteuert. Der Ventilsitzkörper weist hierfür mehrere Druckmittelanschlüsse auf, die in der Grundstellung des Magnetventils durch einen an dem Magnetanker angebrachten Stößel hydraulisch voneinander getrennt sind. Die beiden Gehäuseteile selbst sind durch ein ringförmiges, weiteres Gehäuseteil aus einem nicht-magnetischen Werkstoff magnetisch insoweit voneinander getrennt; jedoch körperlich verbunden. Die genannte magnetische Trennung über das weitere Gehäuseteil dient unter anderem dazu, auf jeden Fall einem sogenannten magnetischen Kurzschluss zu begegnen und eine wirksame Einleitung der Magnetfeldlinien in den zu betätigenden Magnetanker zu gewährleisten, sofern die Betätigungsspule der bekannten Lösung bestromt wird.

Die bekannte Lösung ist aufgrund des weiteren Gehäuseteiles bestehend aus einem nicht-magnetischen Werkstoff für die magnetische Trennung jedoch relativ teuer in der Realisierung und es hat sich gezeigt, dass insbesondere in der praktischen Anwendung des bekannten Magnetventils bei hohen Drücken durch das weitere ringförmige Gehäuseteil für die magnetische Trennung eine Versagensstelle geschaffen ist.

Um den dahingehenden Nachteilen zu begegnen, ist in der DE 100 38 139 B4 bei einem Führungselement aus einem magnetisierbaren Grundwerkstoff und mindestens einem Bereich verminderter Magnetisierbarkeit bereits vorgeschlagen worden, den Bereich verminderter Magnetisierbarkeit als eine Art integralen Bestandteil des Grundwerkstoffs zu realisieren. Dabei wird bei einer Ausgestaltung der bekannten Lehre in ein für Magnetventile geeignetes Druckrohr eine umlaufende Nut eingebracht, die mittels eines Laserauftrag- oder Laserschweißverfahrens mit einem Zusatzwerkstoff verminderter Magnetisierbarkeit versehen wird, wobei als besonders geeignet austenitische Werkstoffe angegeben werden, wie insbesondere Nickel, Chrom und Mangan. Jedoch sind auch die dahingehenden Laserbehandlungsverfahren mit einem gewissen Kostenaufwand verbunden.

Durch die EP 0 951 412 B2 ist ein gattungsgemäßes Magnetventil für die Ansteuerung von flüssigen und gasförmigen Arbeitsmedien bekannt, wobei das dahingehende Magnetventil insbesondere für hydraulische Bremsanlagen für Kraftfahrzeuge einsetzbar ist. Das bekannte Magnetventil weist ein erstes, vorzugsweise zylindrisches Gehäuseteil auf, das von einer Magnetspule umgeben ist und eine Aufnahme für einen Anker bildet. Die Aufnahme bildet eine Axialführung für den genannten Anker aus und ein Energiespeicher in Form einer Rückstellfeder beaufschlagt den Anker zusammen mit einem an ihm angreifenden Ventilstößel, der als eine Art Ventilschließglied ausgebildet, für ein schließendes Magnetventil auf einen Ventilsitz drückt, der mit entsprechenden Fluidanschlüssen innerhalb des Ventilkörpers zusammenwirkt. Koaxial zu dem ersten Gehäuseteil ist ein zweites Gehäuseteil angeordnet, das eine in Längserstreckung des Magnetventils verlaufende zylindrische Ausnehmung aufweist, die mit den genannten Ventilanschlüssen in Verbindung steht und in der der Ventilsitz angeordnet ist.

Das erste und das zweite Gehäuseteil sind einstückig aus einem ferromagnetischen Material hergestellt, das den Anker in Form einer als Polrohr dienenden dünnwandigen Hülse umgibt, deren über ihren Verlauf gleichbleibende Wanddicke zur Verminderung eines magnetischen Kurzschlusses nicht größer sein soll, als dies eben zur sicheren Aufnahme der mechanischen Beanspruchung erforderlich ist. Die insoweit notwendige einteilige Ausbildung von erstem mit zweitem Gehäuseteil, was bevorzugt über spanende Bearbeitungsschritte erfolgt, kann entsprechend hohe Herstell- und Montagegenauigkeiten voraussetzen.

Ausgehend von dem vorstehend genannten Stand der Technik liegt der Erfindung die Aufgabe zugrunde, ein einfach herzustellendes und zu montierendes Magnetventil der Fachwelt zur Verfügung zu stellen, das darüber hinaus zur Vermeidung von Kurzschlüssen eine sichere wirksame magnetische Trennung gewährleistet. Eine dahingehende Aufgabe löst ein Magnetventil mit den Merkmalen des Patentanspruches 1 in seiner Gesamtheit.

Entsprechend dem kennzeichnenden Teil des Patentanspruches 1 ist das erste Gehäuseteil mit einer Wandreduzierung versehen, die nach innen in Richtung des Ankers und des zweiten Gehäuseteils weist und die zumindest teilweise eine magnetische Trennung der beiden Gehäuseteile voneinander bewirkt. Die angesprochene Wandreduzierung lässt sich in einfacher Weise fertigungstechnisch erhalten, beispielsweise unter Einsatz eines Rollier- oder Presswerkzeuges und insbesondere kommt die erfindungsgemäße Lösung ohne das Einbringen von Zusatzwerkstoffen aus, um einen magnetischen Kurzschluss vermeiden zu helfen und zur Effizienzerhöhung des magnetischen Systems die magnetische Trennung bewirken zu können. Aufgrund der von innen eingebrachten Vertiefung, die die Wandreduzierung des ersten Gehäuseteiles bildet, ist insoweit das Material der Wand des Gehäuseteils verdichtet, so dass auch bei höheren Druckbeanspruchungen ein sicherer Gegenhalt durch die angesprochene Wandverdichtung erreicht ist. Alternativ kann die Vertiefung auch in spanender Weise eingebracht sein, so dass keine Verdichtung des Materials in diesem Bereich vorliegt. Sofern im Sinne der vorliegenden Erfindung, also von Wandreduzierung die Rede ist, bringt dies zum Ausdruck, dass geometrisch gesehen eine Ausnehmung auf der Innenseite der Gehäuseteilwand vorhanden ist; jedoch keine Schwächung des Materials im Sinne einer fehlenden Drucksteifigkeit anzunehmen ist. Es ist für einen Durchschnittsfachmann auf dem Gebiet der Magnetventiltechnik überraschend, dass er mit einer Wandreduzierung eine sichere magnetische Trennung erreicht und dennoch durch die Verdichtung des verbleibenden Wandstärkenmaterials einen wirksamen Druck-Gegenhalt erzeugt, so dass selbst im Versagensfall des Magnetventils hohe Drücke, bezogen auf den Fluid- oder Medienstrom, sicher von Teilen des Magnetgehäuses noch aufnehmbar sind.

Das erste Gehäuseteil ist vorzugsweise in der Art einer dünnwandigen Hülse als Polrohr im Bereich der Axialführung für den (Magnet-) Anker gebildet, wobei die Hülse zudem in oder über das zweite Gehäuseteil hinaus ragt. Dadurch, dass sich das erste Gehäuseteil im Überschneidungsbereich mit dem zweiten Gehäuseteil als dünnwandige Hülse darstellt, kann durch einen Umformvorgang, wie etwa durch Bördeln, das erste Gehäuseteil an dem zweiten Gehäuseteil festgelegt werden, ohne dass dabei die bereits angesprochene Drucksteifigkeit der Gesamtvorrichtung beeinträchtigt wäre. In vorteilhafter Weise ist dabei vorgesehen, an dem zweiten Gehäuseteil eine Nut um den Außenumfang anzuordnen und den Rand des ersten Gehäuseteils darin einzubördeln. Neben einer sehr druckfesten Verbindung des ersten Gehäuseteils mit dem zweiten Gehäuseteil ist dergestalt auch eine dichtende Anlageverbindung geschaffen.

Eine besonders funktionssichere Anordnung für das erfindungsgemäße Magnetventil ist erreicht, sofern die angesprochene Wandreduzierung in einem Überschneidungsbereich des Ankers mit dem zweiten Gehäuseteil vorgesehen ist, in dem ein ringartiges Ende des Ankers einen stufenförmigen Absatz an einer zu dem Anker benachbarten Seite des zweiten Gehäuseteils übergreift, wobei besonders bevorzugt in einer beabstandeten Position von Anker zu dem Gehäuseteil ein Leerraum im Überschneidungsbereich von einem Mittenabschnitt der Nut in der Hülse übergriffen ist, so dass dergestalt neben einer magnetischen Entkoppelung eine sichere kraftführende Einleitung der Magnetfeldlinien in den Anker mit dem Ventilbetätigungsteil erfolgen kann.

Die Einzelkomponenten des Magnetventils lassen sich durch die vereinfachte Handhabung von zwei in ihrer axialen Länge kürzer gehaltenen Gehäuseteilen auch einfacher montieren.

Bei einer konstruktiv vorteilhaften Ausführung des Magnetventils ist in dem Bereich, in dem die Nut angeordnet ist, der Anker als Zylinder gebildet, der bei einer Verfahrbewegung das zweite, in diesem Bereich kolbenartig gebildete Gehäuseteil partiell überfährt und so ständig, unabhängig von seiner Position, in einem zentrierten Eingriff mit dem ersten Gehäuseteil ist.

Eine manuelle Öffnungsmöglichkeit des Magnetventils in einer Art Notbetrieb bei einer Fehlfunktion, etwa bedingt durch ein Versagen der Magnetspule, ist dadurch gegeben, dass in dem zweiten Gehäuseteil ein stangenartiger Stößel axial verschiebbar gelagert ist, der mittels einer im zweiten Gehäuseteil drehbar geführten Stellschraube von außen her betätigt werden kann. Der Fortsatz selbst ist an seinem einen freien Ende mit einer radialen Aufweitung versehen und dergestalt axial unverschiebbar in der genannten Stellschraube fixiert; jedoch kann beim Drehen der Stell- oder Betätigungsschraube von Hand der Stößel den Anker bewegen und insoweit die mit dem Anker verbundene Spitze als Schließelement von dem Ventilschließglied abgehoben werden. Das Schließelement ist mit seiner Spitze in den Anker an dessen freier Stirnseite eingesetzt und wird mittels eines Stahlrings und einer Bördelung gehalten. Auch bei einem fest sitzenden Anker ist somit eine Freigabe des Ventilsschließglieds ohne weiteres möglich; sobald nach einem Leerhub der stangenartige Stößel mit seinem aufgeweiteten Ende den Anker erfasst. Das Schließelement selbst kann im Anker über ein gewisses radiales Spiel verfügen, so dass der Kegel des Schließelements mit seiner freien Spitze auch bei fertigungsbedingtem Fluchtungsfehler einwandfrei mittig auf den Pilotsitz am Ventilschließglied trifft.

In dem Ventilglied ist vorzugsweise eine Art Rückschlagventil eingebaut, das zusammen mit der Spitze des Schließelements eine Bypassbohrung in dem Ventilschließglied freigibt oder verschließt. Die Rückstellfeder oder ein anders gearteter Energiespeicher lässt sich bevorzugt in einer Ausnehmung in dem Anker um den Stößel herum anordnen. Die Zuordnung der Ventilanschlüsse und die Ausformung des Ventilschließglied lassen sich derart gestalten, dass das Magnetventil in beiden Richtungen durchströmbar ist. Die Rückstellfeder kann sich dabei an dem Anker und dem zweiten Gehäuseteil bevorzugt im Sinne einer Schließ-Position des Ventilschließglieds abstützen.

Nachstehend ist die Erfindung anhand eines in der Zeichnung dargestellten Ausführungsbeispieles im Einzelnen erläutert. Es zeigt die einzige Figur einen schematischen, nicht maßstäblichen Längsschnitt durch ein erfindungsgemäßes Magnetventil.

In der Figur ist in einem Längsschnitt ein Magnetventil 1 zur Steuerung eines Fluids, wie etwa einem flüssigen Arbeitsmittel für einen nicht näher dargestellten hydraulischen Verbraucher einer hydraulischen Anlage gezeigt. Das Magnetventil 1 ist als elektromagnetisch betätigbares, vorgesteuertes Ventil ausgeführt. Das Magnetventil 1 besteht in seinen wesentlichen Teilen aus einem zylindrischen ersten Gehäuseteil 2, mit sich entlang seines Außen- und Innendurchmessers in Stufen verändernden Abmessungen.

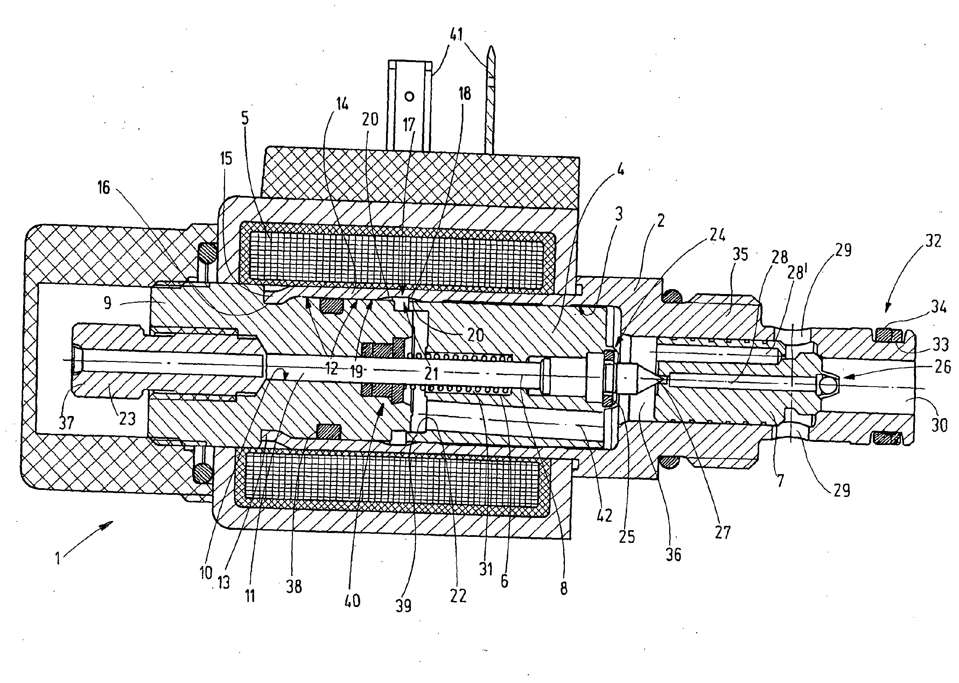

Das erste Gehäuseteil 2 bildet mit seinem, am rechten Rand der Fig. 1 gezeigten, Anschlussstutzen 32 mit einem in eine Umfangsnut 33 eingelegten O-Ring 34, eine fluidische Verbindungsmöglichkeit zu einer nicht gezeigten hydraulischen Anlage, insbesondere zu einem hydraulischen Verbraucher. Der Anschlussstutzen 32 ist Teil eines Ventilkörpers 35, in dessen Axialbereich das erste Gehäuseteil 2 eine große Wandstärke im Vergleich zu seinen übrigen Wandbereichen aufweist. Insoweit bildet der Anschlussstutzen 32 eine Art Cartridge-Ventil aus. Ein radial, in dem Ventilkörper 35 von beiden Seiten her eingebrachter Ventilanschluss 29 ist mit einem zentral und axial aus dem Anschlussstutzen 32 herausgeführten Ventilanschluss 30 verbindbar, wobei ein Ventilschließglied 7 in der Art eines Ventilkolbens ausgebildet, diese fluidführende Verbindung steuert. Das Ventilschließglied 7 ist als Stufenkolben ausgebildet und über ein Schließelement mit Spitze 27 axial beaufschlagt. Der Klemmsitz 24 ist dadurch bewirkt, dass ein Dichtmittel 25 in der Art eines O-Rings in entsprechende Aufnahmen an dem Schließelement und an dem Anker 4 festliegt. Das Ventilschließglied 7 bildet mit seinem, in Fig. 1 gezeigten rechten Rand, einen Ventilsitz, zusammen mit der Bohrung aus, die den Ventilanschluss 30 darstellt.

Das kegelförmige Schließelement liegt mit seiner Spitze 27 in einer Bypassbohrung 28 in dem Ventilschließglied 7 mit seinem rechten freien Ende auf. Eine zweite Bypassbohrung 28', die radial mit Abstand zu der zentral, das Ventilschließglied 7 durchragenden Bypassbohrung 28 und parallel zu dieser angeordnet, das Ventilschließglied 7 durchgreift, ist fluidführend mit dem Ventilanschluss 29 verbunden, und zwar über eine entsprechende Drosselstelle. Ebenso ist die Bypassbohrung 28 über eine Drosselstelle mit einem rückseitigen Druckraum 36 in Verbindung, wobei in die dahingehende Drosselstelle die Spitze des Schließelements in der in der Fig. gezeigten Funktionsstellung eingreift. Insoweit bildet also die Bypassbohrung 28' bei entfernter Schließelementspitze 27 eine fluidführende Verbindung zu dem rückseitigen Druckraum 36, der sich zwischen Magnetanker 4 und der zugewandten Stirnseite des Ventilschließglieds 7 erstreckt.

Ein Rückschlagventil 26 ist an dem, dem Ventilanschluss 30 zugewandten Ende des Ventilschließglieds 7 angeordnet. In Blickrichtung auf die Fig. gesehen, geht links von dem Ventilkörper 35 das erste Gehäuseteil 2 in eine dünnwandige Hülse 14 über, die innerhalb des Magnetventils das sogenannte Polrohr ausbildet. Ferner bildet die Hülse 14 eine Axialführung 3 für den Anker 4 aus, und zwar über eine Länge, die etwa der Hälfte ihrer Gesamtlänge entspricht. Zwischen dem Magnetanker 4 und der Hülse 14 kann ein Gleitmedium eingebracht sein oder Teile der Innengehäusewandung der Hülse 14 sind im Außendurchmesser gegenüber den sonstigen Wandteilen etwas im Durchmesser verbreitert, so dass abgesetzte Schmiertaschen entstehen, in denen das Fluid dann eine Art Gleitdichtung für den Magnetanker 4 ausbildet.

Der kolbenartige Anker 4 wird von dem stangenartigen Stößel 8 durchragt und kann in Abhängigkeit von der Bestromung einer die Hülse 14 in ihrer wesentlichen Länge umschließenden Magnetspule 5 verfahren werden. Der Stößel 8 ist mit einem Fortsatz 11 durch eine Ausnehmung 10 eines zweiten Gehäusetei les 9 geführt, an dessen freiem Endbereich sich eine Stellschraube 23 anschließt, die über eine entsprechende Innenschraubverbindung im zweiten Gehäuseteil 9 drehbar geführt ist. Beim Drehen an einem Kopf 37 mit einer Rändelung lässt sich der Stößel 8 bewegen und kann das Ventilschließglied 7 über den Anker 4 und das in den Anker 4 eingesetzte Schließelement mit Spitze 27 im Sinne einer Öffnen-Position freigeben. Für die dahingehende Notfunktion ist eine äußere Abdeckkappe von den sonstigen Magnetgehäuseteilen abzuziehen.

Das zweite Gehäuseteil 9 ist im wesentlichen wie das erste Gehäuseteil 2 ein zylindrischer, einstückiger Körper, mit entsprechenden Durchmesseranpassungen entlang seiner Außenseite. Das zweite Gehäuseteil 9 ist von der Hülse 14 des ersten Gehäuseteils 2 etwa bis zur Hälfte der axialen Erstrekkung, eine Steckverbindung 12 bildend, umschlossen, wobei das zweite Gehäuseteil 9 eine Umfangsnut 16 aufweist, in die ein Rand 15 der Hülse 14 eingebördelt ist. Der Umformbereich 13 der Hülse 14 stellt sich im Längsschnitt als Kröpfung dar, d. h. der Rand 15 kommt nach der Umformung parallel versetzt in der Umfangsnut 16 zu liegen. Auch der dahingehende Einformvorgang kann mit einem Press- oder Rollienverkzeug vonstatten gehen. Ferner ist ein O-Ring 38 zwischen der Hülse 14 und dem zweiten Gehäuseteil 9 in einer Nut des zweiten Gehäuseteiles 9 angeordnet und dichtet so das erste Gehäuseteil 2 gegen das zweite Gehäuseteil 9 ab.

Zur magnetischen Trennung der beiden Gehäuseteile 2, 9 in der axialen Mitte der Magnetspule 5 ist die Hülse 14 mit einer Wandreduzierung 17 auf etwa die Hälfte der sonstigen Wandstärke der Hülse 14 versehen. Die Wandreduzierung 17 ist durch eine Nut 18 mit flach auslaufenden Flanken 20 am Innenumfang 19 der Hülse 14 gebildet. Ferner umgreift die Wandreduzierung 17 ringartig den Innenbereich der Hülse 14. Durch die Wandreduzierung 17 ist die magnetische Trennung, insbesondere zwischen den beiden Gehäuseteilen 2, 9 erreicht, und befindet sich der Anker 4 in seiner in der Figur gezeigten vorderen Position, ist zwischen einem ringartigen Ende 39 des Ankers 4 und einem benachbarten zugeordneten stufenförmigen Absatz, an einer zu dem Anker 4 benachbarten Seite des zweiten Gehäuseteils 9 ein Leerraum geschaffen, der zum einen die magnetische Trennung weiter begünstigt und zum anderen einen definierten Kraftlinienübergang von Anker 4 zum Gehäuseteil 9 erlaubt. Zudem ist mit dieser Art der Herstellung der magnetischen Trennung der beiden Gehäuseteile 2, 9 voneinander keinerlei thermische Belastung der Bauteile notwendig, wie etwa beim bekannten Auftragsschweißen eines nicht-magnetischen Werkstoffes, so dass bei der Bauteilezusammenfügung keine Spannungen und kein die Genauigkeit beeinträchtigender Materialverzug auftreten kann. Der genannte Leerraum kann sich auch mit Fluid befüllen, das bei der Verfahrbewegung des Ankers 4 entsprechend wieder verdrängt werden kann, beispielsweise über die Gleitdichtung des Ankers 4.

Ein geringes radiales Spiel des Ankers 4 ist in dem Bereich der Wandreduzierung 17 gegeben. Ansonsten ist der Anker 4 mit seinen ringartigen Enden in dem zweiten Gehäuseteil 9 geführt. Dergestalt ist im Überschneidungsbereich 21 eine Art Kolben-Zylinder-Anordnung realisiert, die zentrierend auf den Anker 4 wirkt, so dass dieser stets an dem zweiten Gehäuseteil 9 abstützend an seinem linken und rechten freien Ende geführt ist.

In einer zylindrischen Bohrung der Ausnehmung 22, die von dem Ende 39 des Ankers 4, das dem zweiten Gehäuseteil 9 zugewandt ist, sich erstreckt, ist eine Rückstellfeder 6 als Energiespeicher um den Stößel 8 gelegt. Die Rückstellfeder 6 stützt sich an einer Dichtungsanordnung 40 um den Stößelfortsatz 11 ab. Die Dichtungsanordnung 40 ist in der Art einer Stopfbuchsenpackung um den Fortsatz 11 gelegt und dichtet den Stößel 8 wiederum zur Vermeidung eines Druckmittelverlustes gegenüber dem zweiten Gehäuseteil 9 ab. Druckmittel kann dabei in dem Zwischenraum zwischen dem Anker 4 und dem zweiten Gehäuseteil 9 anstehen, das über eine Längsbohrung 42 im Anker 4 diesen von seiner hinteren Stirnseite zur vorderen Stirnseite in Richtung des Druckraumes 36 und umgekehrt durchqueren kann. Dergestalt ist ein Druckmittelausgleich gegeben, so dass sich im Bereich des Ankers 4 weder ein Überdruck noch ein Unterdruck aufbauen kann, der ansonsten zu Hemmnissen im Betrieb des Ankers 4 führen könnte. Das Magnetventil 1 weist ferner ein abschirmendes Gehäuse auf, insbesondere um seine Magnetspule 5 herum, wobei hier einschlägige Kunststoff- und Elastomermaterial zum Einsatz kommen. Der dahingehende Magnetaufbau ist für Magnetventile üblich, so dass an dieser Stelle hierauf nicht mehr näher eingegangen wird. Zur Bestromung der Magnetspule 5 dient ein an der oberen Seitenwand des Ventilgehäuses angebrachter Stekker 41 zur Anbindung an eine nicht näher dargestellte Steuer- und Stromversorgungseinheit.

Der Ventilkörper 35 des Magnetventils 1 ist sowohl von dem Ventilanschluss 29 zu dem Ventilanschluss 30 als auch umgekehrt durchströmbar. Im bestromten Zustand der Magnetspule 5 ist der Anker 4 und das Schließelement mit Spitze 27 sowie das Ventilschließglied 7 in Blickrichtung auf die Figur gesehen nach links entgegen der Rückstellkraft der Rückstellfeder 6 bewegt, wobei dann eine Durchströmung des Ventilkörpers 35 in beide Richtungen zwischen den Ventilanschlüssen 29 und 30 möglich ist.

Im unbestromten Zustand des Magnetventils hingegen ist eine Druckmittelströmung vom Ventilanschluss 29 zum Ventilanschluss 30 verhindert; jedoch umgekehrt besteht die Möglichkeit der Fluidverbindung zwischen dem Ventilanschluss 30 und dem Ventilanschluss 29. Für die dahingehende Durchströmungsrichtung von Anschluss 30 zu Anschluss 29 muss jedoch der Ventilkolben 7 entgegen der Kraft der Rückstellfeder 6 verschoben werden, was beispielsweise bei einer Druckdifferenz von ca. 1,5 bar (Rückschlagfunktion) erfolgt. Wie dargelegt, ist hierbei die Magnetspule 5 unbestromt. Mit der erfindungsgemäßen Lösung ist mithin eine Art 2/2-WegeSitzventil realisiert, das magnetbetätigt und vorgesteuert als Einschraubventil Drücke von durchaus 350 bar beherrschen kann, das im normalen Zustand geschlossen ist und wie dargelegt eine Rückschlag- oder Reverse-Flow-Funktion erlaubt.

## Patentansprüche

1. Magnetventil für die Ansteuerung eines Fluids mit einem ersten Gehäuseteil (2), mit einer nach innen weisenden Axialführung (3) für einen Anker (4), der unter der Wirkung einer das erste Gehäuseteil (2) nach außen hin zumindest teilweise umgebenden Magnetspule (5) in der Axialführung (3) verschiebbar ist, mit einer Rückstellfeder (6) und einem, ein Ventilschließglied (7) beaufschlagenden Schließelement (27), und mit einem zweiten Gehäuseteil (9), das koaxial zu dem ersten Gehäuseteil (2) angeordnet ist, **dadurch gekennzeichnet, dass** das erste Gehäuseteil (2) eine Wandreduzierung (17) aufweist, die nach innen in Richtung des Ankers (4) und des zweiten Gehäuseteils (9) weist und die zumindest teilweise eine magnetische Trennung der beiden Gehäuseteile (2, 9) voneinander bewirkt.

2. Magnetventil nach Anspruch 1, **dadurch gekennzeichnet, dass** das erste Gehäuseteil (2) eine dünnwandige Hülse (14) in der Art eines Polrohres aufweist, die im wesentlichen die Axialführung (3) für den Anker (4) bildet, und dass in die Hülse (14) das zweite Gehäuseteil (9) zumindest teilweise unter Anlage mit der Hülse (14) hineinragt.

3. Magnetventil nach Anspruch 2, **dadurch gekennzeichnet, dass** die Hülse (14) die Wandreduzierung (17) in Form einer Nut (18) an ihrem Innenumfang (19) aufweist.

4. Magnetventi nach Anspruch 3, **dadurch gekennzeichnet, dass** die Nut (18) flache, zu den benachbarten Wandbereichen der Hülse (14) hin auslaufende Flanken (10) aufweist.

5. Magnetventil nach einem der Ansprüche 1 bis 4, **dadurch gekennzeichnet, dass** die Wandreduzierung (17) in einem Überschneidungsbereich (21) des Ankers (4) mit dem zweiten Gehäuseteil (9) angeordnet ist, in dem ein ringartiges Ende (39) des Ankers (4) einen stufenförmigen Absatz an einer zu dem Anker (4) benachbarten Seite des zweiten Gehäuseteils (9) übergreift.

6. Magnetventil nach Anspruch 5, **dadurch gekennzeichnet, dass** in einer beabstandeten Position von Anker (4) zu dem Gehäuseteil (9) ein Leerraum im Überschneidungsbereich (21) von einem Mittenabschnitt der Nut (18) in der Hülse (14) übergriffen ist.

7. Magnetventil nach einem der Ansprüche 1 bis 6, **dadurch gekennzeichnet, dass** das erste Gehäuseteil (2) und das zweite Gehäuseteil (9) in der Art einer Steckverbindung miteinander verbunden sind, bei der das erste Gehäuseteil (2) das zweite Gehäuseteil (9), in axialer Betätigungsrichtung des Ventils gesehen, zumindest teilweise übergreift, und dass das eine freie Ende des Gehäuseteils (2) in der Art eines Bördelrandes ausgebildet in eine Umfangsnut (16) in dem zweiten Gehäuseteil (9) eingreift.

8. Magnetventil nach Anspruch 7, **dadurch gekennzeichnet, dass** das andere freie Ende des ersten Gehäuseteils (2) einen Ventilkörper (35) für das Ventilschließglied (7) ausbildet, das insoweit von dem Schließelement (27) mitangesteuert eine fluidführende Verbindung zwischen zwei Ventilanschlüssen (29, 30) des Ventilkörpers (35) freigibt oder sperrt.

9. Magnetventil nach einem der Ansprüche 1 bis 8, **dadurch gekennzeichnet, dass** das zweite Gehäuseteil (9) eine mit einem Stößel (8) wirkverbundene Stellschraube (23) aufweist, bei deren manueller Betätigung der Stößel (8), der insoweit mit einem Fortsatz (11) das zweite Gehäuseteil (9) entlang einer axial geführten Ausnehmung (10) zumindest teilweise durchgreift zusammen mit dem Anker (4) in eine Position im Sinne eines Öffnens des Ventilsschließgliedes (7) bewegbar ist.

10. Magnetventil nach einem der Ansprüche 1 bis 9, **dadurch gekennzeichnet, dass** das Magnetventil (1) vorgesteuert ist.

## Claims

1. A solenoid valve for controlling a fluid having a first housing part (2), with an axial guide (3) facing to the inside for an armature (4) which, under the action of a solenoid (5) that at least partially surrounds the first housing part (2) to the outside, can be moved in the axial guide (3), with a reset spring (6) and a closing element (27) which acts on a valve closing member (7), and having a second housing part (9) which is located coaxially to the first housing part (2), **characterised in that** the first housing part (2) has a wall reduction (17) which faces to the inside in the direction of the armature (4) and of the second housing part (9) and which at least partially brings about magnetic separation of the two housing parts (2, 9) from one another.

2. The solenoid valve according to Claim 1, **characterised in that** the first housing part (2) has a thin-walled sleeve (14) in the manner of a pole tube which essentially forms the axial guide (3) for the armature (4), and that the second housing part (9) projects at least partially into the sleeve (14) supported against the sleeve (14).

3. The solenoid valve according to Claim 2, **characterised in that** the sleeve (14) has the wall reduction (17) in the form of a groove (18) on its inner circumference (19).

4. The solenoid valve according to Claim 3, **characterised in that** the groove (18) has flat flanks (10) extending towards the adjacent wall regions of the sleeve (14).

5. The solenoid valve according to any of Claims 1 to 4, **characterised in that** the wall reduction (17) is located in an overlapping region (21) of the armature (4) with the second housing part (9) in which a ring-like end (39) of the armature (4) overlaps a step-shaped shoulder on a side of the second housing part (9) that is adjacent to the armature (4).

6. The solenoid valve according to Claim 5, **characterised in that** in a position spaced apart from the armature (4) to the housing part (9) a middle section of the groove (18) in the sleeve (14) overlaps an empty space in the overlapping region (21).

7. The solenoid valve according to any of Claims 1 to 6, **characterised in that** the first housing part (2) and the second housing part (9) are connected to one another in the manner of a plug connection wherein the first housing part (2) at least partially overlaps the second housing part (9) in the axial actuation direction of the valve, and that the one free end of the housing part (2), formed in the manner of a flange edge, engages in a circumferential groove (16) in the second housing part (9).

8. The solenoid valve according to Claim 7, **characterised in that** the other free end of the first housing part (2) forms a valve body (35) for the valve closing member (7) that in this respect, also controlled by the closure element (27), clears or blocks a fluid-conveying connection between two valve ports (29, 30) of the valve body (35).

9. The solenoid valve according to any of Claims 1 to 8, **characterised in that** the second housing part (9) has a set screw (23) functionally connected to a stem (8), upon actuation of which the stem (8), which in this respect, with an extension (11), at least partially passes through the second housing part (9) together with the armature (4) along an axially guided recess (10) and can be moved into a position for the purpose of opening the valve closing member (7).

10. The solenoid valve according to any of Claims 1 to 9, **characterised in that** the solenoid valve (1) is piloted.

## Revendications

1. Electrovanne pour se rendre maître d'un fluide comprenant une première partie (2) de corps, un guidage (3) axial et tourné vers l'intérieur pour une armature (4) qui, sous l'effet d'une bobine (5) magnétique entourant au moins en partie la première partie (2) de corps vers l'extérieur, peut coulisser dans le guidage (3) axial, un ressort (6) de rappel et un élément (27) de fermeture s'appliquant à un obturateur (7) de la vanne, et une deuxième partie (9) de corps, qui est co-axiale à la première partie (2) de corps, **caractérisée en ce que** la première partie (2) de corps a une réduction (17) de paroi, qui est tournée vers l'intérieur, dans la direction de l'armature (4) et de la deuxième partie (9) de corps, et qui provoque, au moins en partie, une séparation magnétique des deux parties (2, 9) de corps l'une de l'autre.

2. Electrovanne suivant la revendication 1, **caractérisée en ce que** la première partie (2) de corps a un manchon (14) à paroi mince, à la manière d'un tube polaire, qui forme essentiellement le guidage (3) axial de l'armature (4) et **en ce que** la deuxième partie (9) de corps pénètre, au moins en partie, dans le manchon (14), en s'appliquant au manchon (14).

3. Electrovanne suivant la revendication 2, **caractérisée en ce que** le manchon (14) a la réduction (17) de paroi sous la forme d'une rainure (18) sur son pourtour (19) intérieur.

4. Electrovanne suivant la revendication 3, **caractérisée en ce que** la rainure (18) a des flancs (10) plats s'étendant vers les parties de parois voisines du manchon (14).

5. Electrovanne suivant l'une des revendications 1 à 4, **caractérisée en ce que** la réduction (17) de paroi est disposée dans une zone (21) d'intersection de l'armature (4) avec la deuxième partie (9) de corps, dans laquelle une extrémité (39) de type annulaire de l'armature (4) chevauche un ressaut en forme de palier sur un côté, voisin de l'armature (4), de la deuxième partie (9) de corps.

6. Electrovanne suivant la revendication 5, **caractérisée en ce que**, dans une position à distance de l'armature (4) par rapport à la partie (9) de corps, un espace vide dans la zone (21) d'intersection est chevauché par un tronçon médian de la rainure (18) du manchon (14).

7. Electrovanne suivant l'une des revendications 1 à 6, **caractérisée en ce que** la première partie (2) de corps et la deuxième partie (9) de corps sont reliées entre elles à la manière d'une liaison par emmanchement, dans laquelle la première partie (2) de corps chevauche, au moins en partie, la deuxième partie (9) de corps, considéré dans la direction d'actionnement axial de la vanne, lorsque l'une des extrémités libres de la partie (2) de corps constituée sous la forme d'un bord relevé pénètre dans la rainure (16) périphérique de la deuxième (9) partie de corps.

8. Electrovanne suivant la revendication 7, **caractérisée en ce que** l'autre extrémité libre de la première partie (2) de corps forme une pièce (35) de vanne pour l'obturateur (7) de la vanne, qui, dans la mesure où il est commandé en entraînement par l'élément (27) de fermeture, dégage ou obture une communication fluidique entre deux raccords (29, 30) de vanne de la pièce (35) de vanne.

9. Electrovanne suivant l'une des revendications 1 à 8, **caractérisée en ce que** la deuxième partie (9) de corps a une vis (23) de réglage reliée à un poussoir (8) à l'actionnement manuel de laquelle, le poussoir (8), dans la mesure où il accroche au moins en partie le long d'un évidement (10) guidé axialement par un prolongement (11) la deuxième partie (9) du boîtier, est mobile ensemble avec l'armature (4) pour venir dans une position en vue d'une ouverture de l'organe (7) de fermeture de la vanne.

10. Electrovanne suivant l'une des revendications 1 à 9, **caractérisée en ce que** l'électrovanne (1) est pilotée.
